**Europäisches Patentamt**

**European Patent Office**

**Office européen des brevets**

(11) Veröffentlichungsnummer: **0 107 148**
**B1**

(12) **EUROPÄISCHE PATENTSCHRIFT**

(45) Veröffentlichungstag der Patentschrift:
06.08.86

(51) Int. Cl.⁴: **A 22 C 11/00**

(21) Anmeldenummer: **83110184.5**

(22) Anmeldetag: **12.10.83**

(54) Vorrichtung zur automatischen Übergabe von aneinanderhängenden Wurstschleifen von einem Aufnehmer.

(30) Priorität: **13.10.82 DE 3238023**

(43) Veröffentlichungstag der Anmeldung:
**02.05.84 Patentblatt 84/18**

(45) Bekanntmachung des Hinweises auf die Patenterteilung:
**06.08.86 Patentblatt 86/32**

(84) Benannte Vertragsstaaten:
**AT CH DE FR GB LI**

(56) Entgegenhaltungen:
**DE - A - 2 143 858**
**DE - A - 2 610 315**
**DE - A - 3 206 956**
**FR - A - 1 103 444**
**US - A - 3 204 844**

(73) Patentinhaber: **Albert Handtmann Maschinenfabrik GmbH & Co. KG, Birkenallee 25-29, D-7950 Biberach a.d. Riss 1 (DE)**

(72) Erfinder: **Staudenrausch, Georg, Rosenstrasse 14, D-7950 Biberach 18 (Rissegg) (DE)**
Erfinder: **Abt, Franz, Beethovenweg 14, D-7957 Schemmerhofen (DE)**
Erfinder: **Kern, Manfred, Manlichstrasse 4, D-7951 Ummendorf (DE)**
Erfinder: **Zinser, Georg, Am Ränkle 8, D-7951 Winterstettenstadt (DE)**

(74) Vertreter: **Patentanwälte Grünecker, Dr. Kinkeldey, Dr. Stockmair, Dr. Schumann, Jakob, Dr. Bezold, Meister, Hilgers, Dr. Meyer-Plath, Maximilianstrasse 58, D-8000 München 22 (DE)**

**Beschreibung**

Die Erfindung betrifft eine Vorrichtung zur automatischen, kontinuierlichen oder schrittweisen Abgabe von aneinanderhängenden Wurstschleifen von einem langgestreckten Aufnehmer, dessen hinterem Ende in Längsrichtung zusammenhängende Würste nach ihrer Herstellung zugefördert und von diesem in aneinanderhängenden Wurstschleifen getragen werden, und mit einem Antrieb, um die Wurstschleifen auf dem Aufnehmer zu dessen vorderem Ende zu fördern.

Durch die DE-A-2619296 und durch die US-A-3191222 sind Aufhänge- und Fördereinrichtungen für Würste bekanntgeworden, die einen endlos umlaufenden Förderer für die Wurstschleifen aufweisen, welche von Hand auf einen Rauchstock abgehoben werden.

Gegenstand der US-A-3533495 ist eine Vorrichtung zur automatischen Übergabe von Wurstschleifen von einem Aufnehmer auf einen Rauchstock. Der Aufnehmer ist dabei als endlos umlaufende Kette ausgebildet, die mit Haken versehen ist, an denen die Wurstschleifen hängen. Die Übergabe der Wurstschleifen von den Haken auf den Rauchstock erfolgt dabei in der Weise, dass bei Stillstand der Kette, in manchen Fällen auch während des Laufes, der Rauchstock relativ zu der Kette so bewegt wird, dass die Wurstschleifen von den Haken abgestreift werden. Der Abstand der Wurstschleifen auf dem Rauchstock entspricht dabei dem Abstand der Haken auf der Kette. Beim Abstreifen der Wurstschleifen von den Haken besteht die Gefahr, dass die verhältnismässig empfindlichen Wursthüllen beschädigt oder zerstört werden und dass die Wurstschleifen nicht mehr im gleichmässigen Abstand auf dem Rauchstock hängen.

Bei einer durch die US-A-3115668 bekanntgewordenen Vorrichtung rutschen die aneinanderhängenden Würste im Anschluss an eine Portionier- und Abdrehvorrichtung auf einen drehbaren Rauchstock, der winklig zu seiner Drehachse steht und an seinem freien Ende einen Anschlag hat, der die Würste auf dem Rauchstock hält. Der Rauchstock ist dabei lose in einer drehbaren Scheibe gehalten, aus der er von Hand abgenommen wird, sobald die gewünschte Anzahl von Wurstschleifen, die eng aneinanderliegen, erreicht ist.

Gegenstand der DE-C-2610315 ist eine Aufhängevorrichtung für Würste mit einem drehbaren, stabförmigen Aufnehmer, dessen eines Ende als Aufnehmerarm ausgebildet ist. Dieser liegt im Austrittsbereich der Würste aus einer Zuführvorrichtung und bildet mit dem Aufnehmerarm einen Winkel. Zur gleichmässigen Verteilung der Würste über die Länge des Aufnehmers kann dieser als Schneckenwelle ausgebildet oder mit einem Bandförderer gekoppelt sein, der zwischen die Wurstschleifen greifende Förderfinger hat.

Bei dieser bekannten Aufhängevorrichtung werden die Wurstschleifen von der Schneckenwelle im allgemeinen dadurch abgenommen, dass der Rauchstock wie beim Gegenstand der eingangs erwähnten Vorrichtungen (DE-A-2619296, US-A-3191222) zwischen die Wurstschleifen geschoben und dann so hochgehoben wird, dass die Würstchen an ihren Abdrehstellen auf dem Rauchstock zu liegen kommen. Dann wird der Rauchstock mit den Würstchen in axialer Richtung von der Schneckenwelle entfernt. Diese Art der Übernahme scheitert jedoch dann, wenn die Würstchen paarweise auf der Schneckenwelle hängen, da sie wegen des verhältnismässig grossen Aussendurchmessers der Schneckenwelle nicht in axialer Richtung abgenommen werden können.

Schliesslich ist in der DE-A-3206956 eine Beschickungsmaschine und Aufnahmeeinrichtung für portionierte Wurstketten beschrieben und dargestellt, bei der die in Schleifen aneinanderhängenden Würste von einem Tisch durch Förderbänder abgenommen und einem Beschickungsarm zugeführt werden, der sich kreisförmig um einen Rauchstock dreht. Dabei legt ein Drahtkorbkrümmer je nach der Bandgeschwindigkeit mehr oder weniger lange Schleifen auf den darunter angeordneten Rauchstock ab, der sich währenddessen horizontal verschiebt. Sobald ein Rauchstock beladen ist, wird er durch einen Ausklinkmechanismus auf einer diagonalen Führungsstange verfahren. Im Anschluss daran wird ein leerer Rauchstock in einen Steckenhalter eingesteckt und in die Ladeposition zurücktransportiert. Das bedeutet, dass während des Verfahrens des beladenen Rauchstockes und des Auswechselns gegen einen leeren Rauchstock Totzeiten entstehen, die für einen folgenden Beladevorgang nicht nutzbar sind.

Ausgehend vom Gegenstand der DE-C-2610315 liegt der Erfindung die Aufgabe zugrunde, diese bekannte Aufhängevorrichtung weiterzubilden, dass der Aufnehmer als Puffer wirkt, von dem die Wurstschleifen ohne Totzeiten und so schonend wie möglich auf einen Rauchstock abgegeben werden können.

Bei der Vorrichtung der eingangs umrissenen Gattung wird diese Aufgabe erfindungsgemäss dadurch gelöst, dass dicht unter dem Aufnehmer ein in Förderrichtung des Aufnehmers relativ zu diesem verschiebbarer Rauchstock so angeordnet ist, dass er die vom vorderen Ende des Aufnehmers herabfallenden Wurstschleifen aufnimmt und dass der Rauchstock mittels einer Steuerung so unter dem Aufnehmer in dessen Längsrichtung herausfahrbar ist, dass die Wurstschleifen in gleichmässigem Abstand auf dem Rauchstock verteilt werden.

Die Wurstschleifen fallen entsprechend den Förderschritten des Aufnehmers an dessen Abgabeende auf den darunter angeordneten Rauchstock, der sich schrittweise oder kontinuierlich aus dem Arbeitsbereich des Aufnehmers zurückzieht. Dabei wird ein gewünschter Abstand zwischen den Wurstschleifen auf dem Rauchstock eingehalten. Die Würste bleiben dabei unversehrt, weil ein Anheben des Rauchstockes zum Abheben der Würste von dem Aufnehmer oder ein Umkreisen des Rauchstockes durch einen Drahtkorbkrümmer nicht erforderlich ist. Dadurch, dass dem Aufnehmer ein Rauchstock zugeordnet ist, wirkt der Aufnehmer als Puffer, der während des Auswechselns eines vollen Rauchstockes gegen einen leeren Rauchstock und während des anschliessenden Einschiebens des leeren Rauchstockes unter den Aufnehmer schon wieder mit neuen Wurstschleifen behängt werden kann, so dass keine Totzeiten entstehen.

Vorzugsweise verläuft der Rauchstock parallel zu dem Aufnehmer.

In Weiterbildung der Erfindung ist vorgesehen, dass der Rauchstock in Schritten verschiebbar ist, die den Vorschubschritten der Wurstschleifen auf dem Aufnehmer angepasst bzw. in Sonderfällen gleich diesem Vorschub sind. Der Abstand der Wurstschleifen auf dem Rauchstock kann dabei durch Wahl der Verschiebegeschwindigkeit bzw. der Schrittlänge des Rauchstockes in weiten Grenzen vorbestimmt werden.

Die Regelung kann vorzugsweise als Funktion der im vorhergehenden Zyklus hergestellten Wurstschleifenanzahl erfolgen. Die Schrittlänge des Rauchstocks von Stock zu Stock kann automatisch so gewählt werden, dass die sich auf dem Aufnehmer befindlichen Wurstschleifen gleichmässig auf dem Rauchstock verteilt werden.

Nach einem weiteren Merkmal der Erfindung stehen mehrere Rauchstöcke von einer Rauchstocktrommel ab, die um ihre parallel zu den Rauchstöcken verlaufende Mittelachse in Schritten drehbar ist, welche dem Winkel zwischen den Rauchstöcken entsprechen.

Vorzugsweise ist dabei die Rauchstocktrommel an einem axial beweglichen Verschieberohr gehalten, dessen Längsachse parallel zu den Rauchstöcken ausgerichtet ist.

Die Rauchstocktrommel ist dabei abnehmbar am Verschieberohr befestigt.

Mit dieser Ausbildung der Erfindung ist es möglich, zunächst eine bestimmte Zahl von Rauchstöcken mit Wurstschleifen zu behängen, so dass die Bedienungsperson nur noch die behängte Rauchstocktrommel abzunehmen und in eine Rauchkammer zu hängen braucht. Währenddessen kann eine leere Rauchstocktrommel am Verschieberohr befestigt werden, so dass keine oder nur sehr geringe Totzeiten auftreten.

Es ist aber auch möglich, die einzelnen behängten Rauchstöcke in die Rauchkammer zu transportieren. Die Rauchstockaufnahmen in der Rauchstocktrommel dienen dann als Magazin für behangene und unbehangene Rauchstöcke.

Die Schneckenwelle des Aufnehmers kann kontinuierlich durchlaufen. Eine besonders schonende Behandlung wird erreicht, wenn der Aufnehmer eine drehbare Schneckenwelle ist, wie sie aus der bereits genannten DE-C-2610315 bekannt ist. ist.

Um zu verhindern, dass sich die Würste mit der Schneckenwelle drehen, ist vorgesehen, dass dem Aufnehmer eine Einrichtung zum Benetzen der auf dem Aufnehmer gleitenden Würste zugeordnet ist.

Die Erfindung ist nachstehend an einem Ausführungsbeispiel erläutert, das in der Zeichnung dargestellt ist. Es zeigen:

Fig. 1 die Ansicht einer Vorrichung zum Portionieren und Abdrehen von Würsten mit der anschliessenden, erfindungsgemäss ausgebildeten Vorrichtung zur automatischen Übergabe der Wurstschleifen auf die Rauchstöcke;

Fig. 2 eine vergrösserte Schnittdarstellung der Vorrichtung gemäss der Erfindung, und

Fig. 3 einen Querschnitt in der Ebene III–III der Fig. 2.

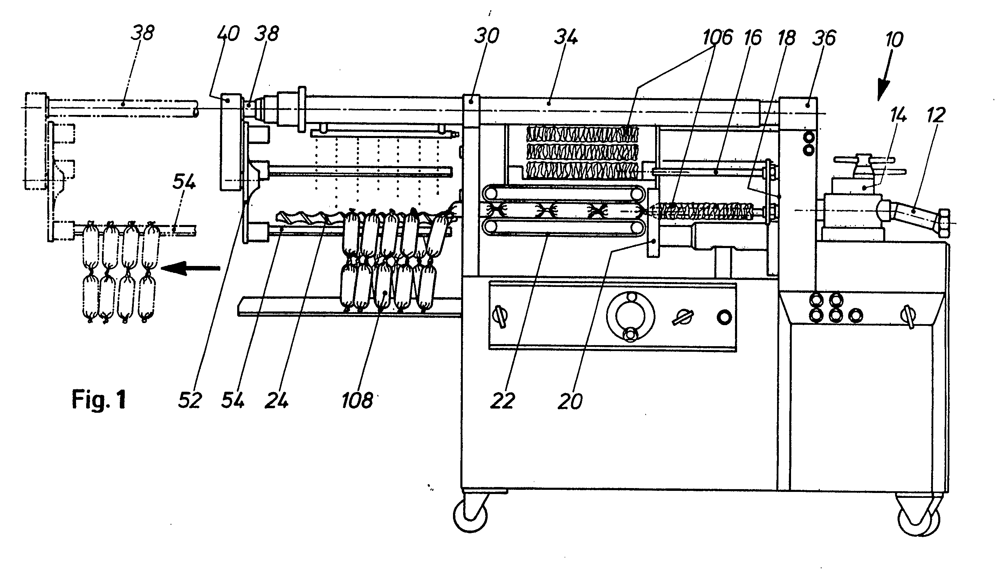

Fig. 1 zeigt im rechten Teil schematisch eine Wurstherstellungsmaschine 10, die über eine Leitung 12 an eine nicht gezeigte Füllpumpe für das Wurstbrät angeschlossen ist. Über eine Dosierpumpe 14 gelangt das Wurstbrät in eine in Arbeitsstellung befindliche Abdrehtülle 16. Diese ist zusammen mit weiteren Abdrehtüllen an einem Revolverkopf 18 befestigt. Ein Abdrehorgan 20 dient dazu, die gefüllten Wursthüllen dicht hinter dem freien Ende der Abdrehtülle 16 einzuschnüren. Über eine Fördereinrichtung 22 gelangen die aneinanderhängenden Würste zu einem Aufnehmer 24, der als Schneckenwelle ausgebildet ist.

Der Aufnehmer 24 ist in der in der DE-C-2610315 beschriebenen Weise über einen schrägen Aufnehmerarm 26 an einem Hüllring 28 befestigt, der drehbar in einem Träger 30 gelagert ist. Für den Drehantrieb besitzt der Hüllring 28 eine Aussenverzahnung 32, die mit einem nicht gezeigten Antriebsritzel in Eingriff ist.

An der Wurstherstellungsmaschine 10 ist ein Trägerrohr 34 befestigt, dessen eines Ende in einem Lagerbock 36 und dessen Mittelbereich im Träger 30 abgestützt ist. In dem Trägerrohr 34 ist ein Verschieberohr 38 axial beweglich gelagert, an dessen aus dem Trägerrohr 34 herausragenden Ende ein Tragarm 40 befestigt ist. Hierzu ist in das geschlossene, freie Ende des Verschieberohres 38 ein Bolzen 42 eingeschraubt, der den Tragarm 40 aufnimmt. Zum Abnehmen des Tragarms 40 vom Bolzen 42 genügt es, vom freien Gewindeende des Bolzens 42 eine Mutter 44 abzuschrauben.

Am unteren Ende des Tragarms 40 ist über Wälzlager 48 die Achse 50 einer scheibenförmigen Rauchstocktrommel 52 drehbar befestigt. Von dieser Rauchstocktrommel 52 stehen gleichmässig auf dem Umfang verteilt sieben Rauchstöcke 54 ab, die parallel zur Längsachse des Aufnehmers 24 verlaufen. Jeder Rauchstock 54, der im Querschnitt verschiedene Formen haben kann, z. B. die Form eines dreizackigen Sterns, ist in einer Aufnahmehülse 58 der Rauchstocktrommel 52 befestigt.

Zur Arretierung der Rauchstocktrommel 52 ist im Tragarm 40 ein Rastbolzen 60 vorgesehen, der mit seinem Kupplungsende 62 in entsprechende Aussparungen 64 der Rauchstocktrommel 52 eingreift. Die Aussparungen 64 sind dabei so am Umfang der Rauchstocktrommel 52 angeordnet, dass in der arretierten Stellung der Rauchstocktrommel 52 jeweils ein Rauchstock 54 genau senkrecht unterhalb des Aufnehmers 24 liegt.

Der Rastbolzen 60 ist so ausgebildet, dass die Rauchstocktrommel 52 nur in eine Richtung gedreht werden kann. Durch Verdrehen des Rastbolzens 60 um 180° kann die Drehrichtung der Rauchstocktrommel 52 umgekehrt werden. Dadurch ist die Abnahme behängter Rauchstöcke von der Maschinenvorderseite oder -rückseite aus möglich.

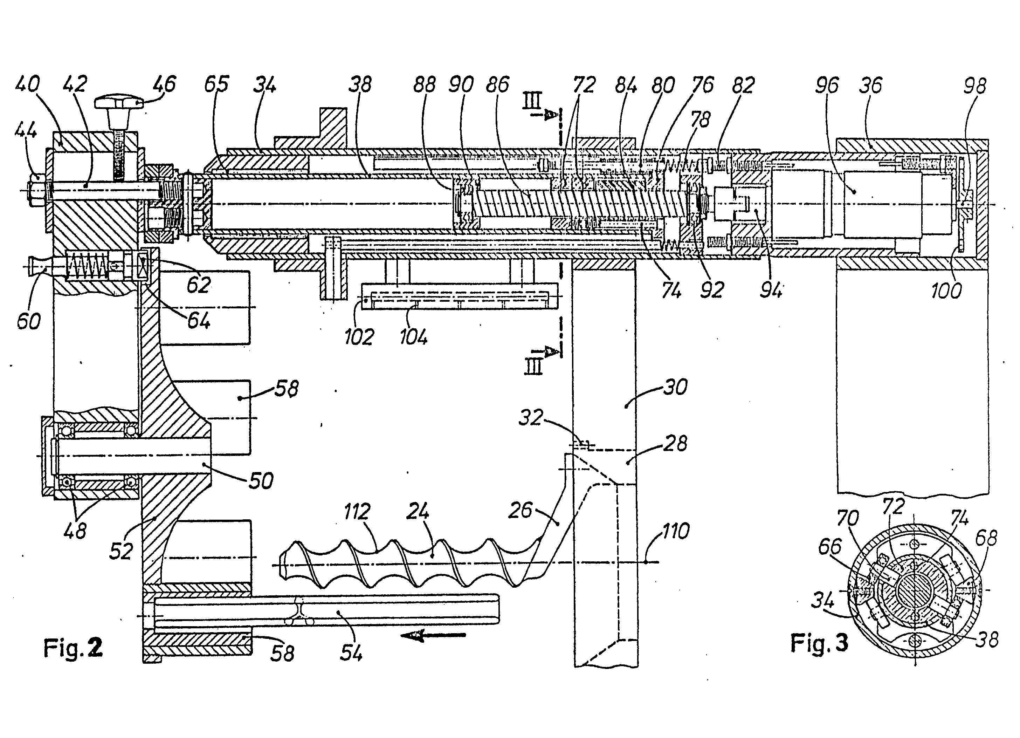

Zur Führung des Verschieberohres 38 im Trägerrohr 34 dienen eine Kugelführungsbüchse 65 am offenen Ende des Trägerrohrs 34 sowie vier in Fig. 3 gezeigte Radialwälzlager 66, die sich paarweise auf zwei gegenüberliegenden Führungsschienen 68 abstützen, welche an der Innenwand des Trägerrohres 34 befestigt sind und in dessen Längsrichtung verlaufen. Je zwei diametral gegenüberliegende Radialwälzlager 66 sind über zugehörige Achsbolzen 70 in einem Tragring 72 befestigt, der im Verschieberohr 38 sitzt. Beide Tragringe 72 können so gegeneinander verstellt und fixiert werden, dass die Radialführung des Verschieberohres nahezu spielfrei ist. Über zwei Zuganker 74 wird der Flanschring 76 gegen das Ende des Verschieberohres gezogen.

Ein Bolzen 80 dient als Schaltelement für den Induktionsschalter 82, mit welchem der Stopp der Einfahrbewegung des Verschieberohres 38 eingeleitet wird. Der Nachlaufweg des Bolzens 80 wird durch die Feder 78 aufgenommen.

Zwischen dem Flanschring 76 und dem diesem axial gegenüberliegenden Tragring 72 ist eine Mutter 84 schwimmend gelagert. Diese Mutter 84 ist auf eine Gewindespindel 86 mit Trapezgewinde aufgeschraubt, deren zur Kugelführungsbüchse 65 gerichtetes Ende über ein Wälzlager 88 und einen Schiebering 90 im Verschieberohr 38 radial abgestützt ist. Das gegenüberliegende Ende der Gewindespindel 86 ist über ein Radiallager 92 im Trägerrohr 34 drehbar gelagert.

Die Gewindespindel 86 ist über eine Klauenkupplung 94 mit der Antriebswelle eines Getriebemotors 96 verbunden, welcher im Lagerbock 36 befestigt ist. Auf das rückseitig aus dem Getriebemotor 96 herausgeführte Wellenende 98 ist ein scheibenförmiger Impulsgeber 100 befestigt, der in bekannter Weise eine Umdrehungsmessung der Motorwelle gestattet.

Es hat sich in manchen Fällen als vorteilhaft erwiesen, wenn der Getriebemotor 96 beim Einfahren des Rauchstockes 54 in die Wurstschleifen mit Maximaldrehzahl, beim Ausfahren dagegen mit niedriger, aber gleichbleibender Drehzahl innerhalb der Schrittlängen läuft. Die Schrittlängen können über eine Nachlaufkorrektur konstant gehalten werden.

Über dem Aufnehmer 24 ist an der Unterseite des Trägerrohres 34 eine Einrichtung 102 mit nach unten gerichteten Sprühdüsen 104 befestigt.

Nach Einschalten der Maschine 10 wird mittels einer nicht näher dargestellten Einrichtung eine Darmraupe 106 auf die in Fig. 1 oberste Abdrehtülle 16 geschoben, worauf der Revolverkopf 18 diese Abdrehtülle 16 in die in Fig. 1 gezeigte Arbeitsstellung schwenkt. Gleichzeitig wird die Rauchstocktrommel 52 mittels des Gleichstrom-Getriebemotors 96 entgegen der in den Fig. 1 und 2 gezeigten Pfeilrichtung in die Ausgangsstellung eingefahren, in der ein Rauchstock 54 genau senkrecht unter dem Aufnehmer 24 liegt. In dieser Stellung greift der Rauchstock 54, wie Fig. 1 zeigt, unter den als Schneckenwelle ausgebildeten Aufnehmer 24 durch die auf diesem schleifenartig aneinanderhängenden Wurstschleifen 108.

Sobald die beiden erläuterten Bewegungsabläufe beendet sind, beginnt die Maschine 10 mit dem Portionieren und Abdrehen der Würste, und der am Hüllring 28 befestigte Aufnehmer 24 dreht sich um seine Längsachse 110.

Bei jeder Umdrehung des Aufnehmers 24 erfasst der Aufnehmerarm 26 in der in der DE-C-2610315 beschriebenen Weise die von der Fördereinrichtung 22 abgegebene Wurstkette im Bereich einer Einschnürung zwischen zwei Würsten und hebt diese so an, dass diese Einschnürung beim Weiterdrehen des Aufnehmerarmes 26 an diesem entlang auf den Aufnehmer 24 abgleitet. Während der Weiterdrehung des Aufnehmers 24 gleitet die soeben aufgenommene Wurstschleife 108 in der Schneckennut 112 in der eingezeichneten Förderrichtung vorwärts, während dessen die Fördereinrichtung 22 eine weitere Wurstschleife abgibt, die bei der nächsten Umdrehung des Aufnehmers 24 vom Aufnehmerarm 26 abgenommen wird. Die Würstchenzahl je Schleife ist wählbar.

Bei jeder Umdrehung des Aufnehmers 24 fällt von dessen freiem Ende eine Wurstschleife 108 auf den darunter liegenden Rauchstock 54. Durch den Getriebemotor 96 wird dabei über die Gewindespindel 86, die Mutter 84 und das Verschieberohr 38 der Tragarm 40 und mit diesem die Rauchstocktrommel 52 ebenfalls in Förderrichtung ausgefahren, und zwar schrittweise, so dass bei jedem Schritt eine weitere Wurstschleife 108 auf den Rauchstock 54 fällt. Der Drehwinkel des Getriebemotors 96 pro Schrittlänge kann den Abstand der Wurstschleifen 108 auf dem Rauchstock 54 bestimmen.

Der Rauchstock 54 fährt unter dem Aufnehmer 24 hervor, bis alle Wurstschleifen 108, die zu Beginn des Zyklus am Aufnehmer 24 hingen, gleichmässig verteilt auf dem Rauchstock 54 hängen. Am Darmende ist auch die Portionierung der Würste abgeschlossen; der Aufnehmer 24 dreht sich jedoch noch so lange, bis die erste Wurstschleife 108 der folgenden Wurstkette in der vordersten Schneckennut 112 am freien Ende des Aufnehmers 24 hängt.

Wenn die letzte Wurstschleife 108 auf den Rauchstock 54 abgelegt ist, fährt dieser vollständig aus, so dass er weggeschwenkt werden kann.

Durch Drehen der Rauchstocktrommel 52 um eine Teilung befindet sich der nächste, leere Rauchstock 54 in der untersten Stellung und kann entgegengesetzt der eingezeichneten Förderrichtung unter den Aufnehmer 24 und zwischen die dort bereits hängenden Wurstschleifen 108 verschoben werden, so dass ein neuer Arbeitszyklus beginnen kann.

Der behängte Rauchstock 54 wird während des nächsten Zyklus aus der Rauchstocktrommel genommen und in den Rauchwagen oder in die Durchlauf-Rauchanlage gehängt.

Der Ablauf eines Arbeitszyklus kann so gesteuert werden, dass wahlweise die Wurstschleifen 108 einer Darmraupe 106 oder auch mehrerer Darmraupen auf einen Rauchstock 54 gehängt werden. Weiter kann die Bewegung des Aufnehmers 24 so gesteuert werden, dass die Anzahl der Würste in jeder Wurstschleife 108 zwei, drei, vier, sechs, acht, zehn, zwölf, sechzehn oder mehr beträgt. Die Rauchstocklängen sind im allgemeinen so bemessen, dass jeder Rauchstock 54 etwa zwischen 14 und 40 Wurstschleifen 108 aufnehmen kann. Grundsätzlich können die Wurstschleifen aus einer beliebigen Zahl von Würstchen gebildet werden.

Bei grossen Wurstzahlen je Wurstschleife 108 sollte die Gangzahl des als Schneckenwelle ausgebildeten Aufnehmers 24 nicht viel grösser sein als die Zahl der Wurstschleifen 108, damit die oben erwähnte Nachlaufzeit des Aufnehmers 24 zum Befördern der ersten Wurstschleife 108 einer Kette zur vordersten Schneckennut 112 des Aufnehmers 24 nicht grösser ist als die Zeit, die zum Schwenken der Rauchstocktrommel 52 in eine neue Arbeitsstellung benötigt wird.

Wie bereits erwähnt, werden die Wurstschleifen 108 entsprechend dem Drehwinkel pro Schrittlänge des Getriebemotors 96 immer gleichmässig auf den ganzen Rauchstock 54 verteilt, unabhängig von der Zahl der Wurstschleifen 108. Bei weniger als vierzehn Wurstschleifen 108 je Rauchstock 54 werden diese in einem solchen Abstand abgelegt, als ob vierzehn Wurstschleifen 108 vorhanden wären.

Während des Portionierens der Würste für einen Rauchstock 54 (aus einer oder mehreren Darmraupen 106) werden die Umdrehungen des Aufnehmers 24 gezählt, im allgemeinen mittels eines Impulsgebers. Jeder Schleifenzahl ist dann eine Impulszahl für den nachzuschiebenden Weg des Rauchstockes 54 pro Wurstschleife 108 während des Ablegens dieser Wurstschleife zugeordnet.

Um zu vermeiden, dass für verschiedene Rauchstocklängen die Steuerelektronik umgeschaltet werden muss, werden für unterschiedliche Rauchstocklängen unterschiedliche Impulsgeber 100 am Getriebemotor 96 verwendet, deren Bohrungszahl und damit Impulszahl der jeweiligen Rauchstocklänge entspricht. Dadurch verändert sich der Weg des Rauchstockes 54 pro Impuls und damit auch die mit Wurstschleifen 108 behängte Länge auf dem Rauchstock 54.

Um zu verhindern, dass sich während der Rotation des Aufnehmers 24 die Würstchen aufgrund von Reibungskräften mit dem Aufnehmer 24 drehen, werden diese durch die Sprühdüsen 104 der Einrichtung 102 mit Wasser beträufelt. Bei den so benetzten Würstchen wird der Reibungskoeffizient zwischen Würstchen und Aufnehmer 24 verringert. Die Wassermenge kann dabei an einem nicht gezeigten Feinregulierventil eingestellt werden.

Prinzipiell ist es möglich, statt des als Schneckenwelle ausgebildeten Aufnehmers 24 auch ein anderes System vorzusehen, beispielsweise einen als endlos umlaufende Kette mit Haken ausgebildeten Aufnehmer oder einen als glatte Stange gestalteten Aufnehmer, dem ein Abstreifband mit davon abstehenden Abstreiffingern zugeordnet ist.

Ferner ist es prinzipiell auch möglich, den Rauchstock 54 nicht in Schritten zu verfahren, sondern kontinuierlich, wobei auch hier die Verschiebegeschwindigkeit den Abstand der Wurstschleifen 108 auf dem Rauchstock 54 bestimmt.

**Patentansprüche**

1. Vorrichtung zur automatischen, kontinuierlichen oder schrittweisen Abgabe von aneinanderhängenden Wurstschleifen (108) von einem langgestreckten Aufnehmer (24), dessen hinterem Ende in Längsrichtung zusammenhängende Würste nach ihrer Herstellung zugefördert und von diesem in aneinanderhängenden Wurstschleifen (108) getragen werden, und mit einem Antrieb, um die Wurstschleifen (108) auf dem Aufnehmer (24) zu dessen vorderem Ende zu fördern, dadurch gekennzeichnet, dass dicht unter dem Aufnehmer (24) ein in Förderrichtung des Aufnehmers relativ zu diesem verschiebbarer Rauchstock (54) so angeordnet ist, dass er die vom vorderen Ende des Aufnehmers herabfallenden Wurstschleifen (108) aufnimmt und dass der Rauchstock (54) mittels einer Steuerung (96, 98) so unter dem Aufnehmer (24) in dessen Längsrichtung herausfahrbar ist, dass die Wurstschleifen (108) in gleichmässigem Abstand auf dem Rauchstock (24) verteilt werden.

2. Vorrichtung nach Anspruch 1, dadurch gekennzeichnet, dass der Rauchstock (54) parallel zu dem Aufnehmer (24) ausgerichtet ist.

3. Vorrichtung nach Anspruch 1 oder 2, dadurch gekennzeichnet, dass der Rauchstock (54) in Schritten verschiebbar ist, die vom Vorschub der Wurstschleifen (108) auf dem Aufnehmer (24) angepasst bzw. in Sonderfällen gleich dem Vorschub sind.

4. Vorrichtung nach einem der Ansprüche 1 bis 3, dadurch gekennzeichnet, dass die Verschiebegeschwindigkeit bzw. die Schrittlänge des Rauchstockes (54) vorzugsweise als Funktion der im vorhergehenden Zyklus hergestellten Wurstschleifen einstellbar ist.

5. Vorrichtung nach einem der Ansprüche 1 bis 4, dadurch gekennzeichnet, dass mehrere Rauchstöcke (54) von einer Rauchstocktrommel (52) abstehen, die um ihre parallel zu den Rauchstöcken (54) verlaufende Mittelachse in Schritten drehbar ist, welche dem Winkel zwischen den Rauchstöcken (54) entsprechen.

6. Vorrichtung nach Anspruch 5, dadurch gekennzeichnet, dass die Rauchstocktrommel (52) an einem axial beweglichen Verschieberohr (38) gehalten ist, dessen Längsachse parallel zu den Rauchstöcken (54) ausgerichtet ist.

7. Vorrichtung nach Anspruch 6, dadurch gekennzeichnet, dass die Rauchstocktrommel (52) abnehmbar am Verschieberohr (38) befestigt ist.

8. Vorrichtung nach einem der vorhergehenden Ansprüche, dadurch gekennzeichnet, dass der Aufnehmer (24) eine schrittweise oder kontinuierlich drehbare Schneckenwelle ist.

9. Vorrichtung nach einem der vorhergehenden Ansprüche, dadurch gekennzeichnet, dass dem Aufnehmer (24) eine Einrichtung (102) zum Benetzen der auf dem Aufnehmer (24) gleitenden Würste zugeordnet ist.

## Claims

1. Apparatus for the continuous or intermittent automatic delivery of interconnected sausage loops (108) from an elongate take-up device (24) having its rear end supplied with longitudinally interconnected sausages as they are being produced, and adapted to carry said sausages in the form of interconnected loops (108), and comprising drive means for conveying said sausage loops (108) on said take-up device (24) to the forward end thereof, characterized in that closely below said take-up device (24) there is mounted a smoke bar (54) for movement relative to said take-up device in the conveying direction thereof for receiving thereon the sausage loops (108) dropping from the front end of said take-up device, and that with the aid of control means (96, 98) said smoke bar (54) is adapted to be moved from below said take-up device (24) in its longitudinal direction, so that said sausage loops (108) are distributed at uniform spacings on said smoke bar (54).

2. Apparatus according to claim 1, characterized in that said smoke bar (54) is aligned in parallel with said take-up device (24).

3. Apparatus according to claim 1 or 2, characterized in that said smoke bar (54) is adapted to be displaced in steps conforming to the rate of travel of said sausage loops (108) on said take-up device (24), or in special cases equalling said rate of travel.

4. Apparatus according to any of claims 1 to 3, characterized in that the rate of displacement, or the length of the displacement steps, respectively, of said smoke bar (54) is preferably adjustable as a function of the sausage loops produced in the preceding cycle.

5. Apparatus according to any of claims 1 to 4, characterized in that a plurality of smoke bars (54) project from a smoke bar drum (52) mounted for stepwise rotation about its center axis extending parallel to said smoke bars (54), each step corresponding to the angular spacing between said smoke bars (54).

6. Apparatus according to claim 5, characterized in that said smoke bar drum (52) is carried by an axially displaceable shuttle tube (38) the longitudinal axis of which is aligned in parallel to said smoke bars (54).

7. Apparatus according to claim 6, characterized in that said smoke bar drum (52) is releasably secured to said shuttle tube (38).

8. Apparatus according to any of the preceding claims, characterized in that said take-up device (24) is a worm shaft mounted for intermittent or continuous rotation.

9. Apparatus according to any of the preceding claims, characterized in that said take-up device (24) has means (102) associated therewith for wetting the sausages sliding on said take-up device (24).

## Revendications

1. Dispositif pour le transfert automatique, continu ou pas à pas, d'un dispositif récepteur (24) s'étendant en longueur, de boucles de saucisses (108) pendues côte à côte à ce dispositif à l'extrémité postérieure duquel les saucisses accrochées les unes aux autres dans la direction longitudinale sont amenées et sont ensuite portées par ce dispositif récepteur (24) en formant des boucles de saucisses (108) pendues côte à côte, et avec un dispositif moteur pour transporter les boucles de saucisses (108) portées par le dispositif récepteur (24) à l'extrémité antérieure de celui-ci, caractérisé en ce que, juste au-dessous du dispositif récepteur (24), une broche à fumer (54) déplaçable dans la direction de transport du dispositif récepteur (24) par rapport à celui-ci, est disposée de telle façon qu'elle recueille les boucles de saucisses qui tombent de l'extrémité antérieure du dispositif récepteur (24), et que la broche à fumer (54) peut être reculée suivant sa direction longitudinale, sous le dispositif récepteur (24), au moyen d'une commande (96, 98), de telle façon que les boucles de saucisses (108) soient réparties à des distances régulières sur ladite broche à fumer (54).

2. Dispositif selon la revendication 1, caractérisé en ce que la broche à fumer (54) est orientée parallèlement au dispositif récepteur (24).

3. Dispositif selon la revendication 1 ou 2, caractérisé en ce que la broche à fumer (54) peut être déplacée par pas successifs qui sont adaptés à l'avance des boucles de saucisses (108) sur le dispositif récepteur (24) et peuvent être égaux à cette avance dans des cas particuliers.

4. Dispositif selon l'une des revendications précédentes, caractérisé en ce que la vitesse de déplacement, c'est-à-dire la longueur de pas, de la broche à fumer (54) est, de préférence, réglable en fonction des boucles de saucisses (108) fabriquées au cours du cycle précédent.

5. Dispositif selon l'une des revendications précédentes, caractérisé en ce que plusieurs broches à fumer (54) dépassent d'un tambour à broches à fumer (52) qui peut tourner autour de son axe parallèle aux broches à fumer (54) par pas correspondant à l'angle entre lesdites broches à fumer.

6. Dispositif selon la revendication 5, caractérisé en ce que le tambour à broches à fumer (52) est fixé à un tube coulissant (38), mobile axialement, dont l'axe est orienté parallèlement aux broches à fumer (54).

7. Dispositif selon la revendication 6, caractérisé en ce que le tambour à broches à fumer (52) est fixé de façon amovible au tube coulissant (38).

8. Dispositif selon l'une des revendications précédentes, caractérisé en ce que le dispositif récepteur (24) est un arbre en forme de vis sans fin qui peut tourner pas à pas ou de façon continue.

9. Dispositif selon l'une des revendications précédentes, caractérisé en ce qu'un dispositif (102) pour mouiller les saucisses qui glissent sur le dispositif récepteur (24) est associé à ce dispositif.

Fig. 1

Fig. 2

Fig. 3